(19)

**Europäisches Patentamt**
**European Patent Office**
**Office européen des brevets**

(11) **EP 2 719 253 B1**

(12) **EUROPÄISCHE PATENTSCHRIFT**

(45) Veröffentlichungstag und Bekanntmachung des Hinweises auf die Patenterteilung:
**17.06.2015 Patentblatt 2015/25**

(21) Anmeldenummer: **12735857.0**

(22) Anmeldetag: **12.07.2012**

(51) Int Cl.:
**H05B 7/148** *(2006.01)*     **F27B 3/28** *(2006.01)*

(86) Internationale Anmeldenummer:
**PCT/EP2012/063630**

(87) Internationale Veröffentlichungsnummer:
**WO 2013/010891 (24.01.2013 Gazette 2013/04)**

(54) **VERFAHREN ZUM BETREIBEN EINES LICHTBOGENOFENS UND SCHMELZANLAGE MIT EINEM NACH DIESEM VERFAHREN BETRIEBENEN LICHTBOGENOFEN**

METHOD FOR OPERATING AN ARC OVEN AND MELTING ASSEMBLY WITH AN ARC OVEN OPERATED ACCORDING TO THIS METHOD

PROCÉDÉ DE FONCTIONNEMENT D'UN FOUR À ARC ET INSTALLATION DE FUSION DOTÉE D'UN FOUR À ARC FONCTIONNANT SELON CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2011 EP 11174514**

(43) Veröffentlichungstag der Anmeldung:
**16.04.2014 Patentblatt 2014/16**

(73) Patentinhaber: **Siemens Aktiengesellschaft**
**80333 München (DE)**

(72) Erfinder:
• **DÖBBELER, Arno**
**91074 Herzogenaurach (DE)**
• **FINK, Dieter**
**91088 Bubenreuth (DE)**
• **RIEGER, Detlef**
**85598 Baldham (DE)**

(56) Entgegenhaltungen:
**WO-A1-2007/009924     WO-A1-2009/095292**
**WO-A1-2009/095396**

• **BOH M ET AL: "Ergbenisse der körperschallbasierten Schaumschlackenregelung im Einsatz bei den Lech-Stahlwerken", STAHL UND EISEN, VERLAG STAHLEISEN, DUSSELDORF, DE, Bd. 130, Nr. 4, 16. April 2010 (2010-04-16), Seiten 65-71, XP001558172, ISSN: 0340-4803**
• **DITTMER B ET AL: "Identifikation des Prozesszustandes von Drehstromlichtbogenöfen mittels Körperschall", STAHL UND EISEN, VERLAG STAHLEISEN, DUSSELDORF, DE, Bd. 129, Nr. 12, 17. Dezember 2009 (2009-12-17), Seiten 33-41, XP001556675, ISSN: 0340-4803**

**Beschreibung**

Die Erfindung bezieht sich auf ein Verfahren zum Betreiben eines Lichtbogenofens. Außerdem bezieht sich die Erfindung auf eine Schmelzanlage mit einem nach diesem Verfahren betriebenen Lichtbogenofen.

In einem Lichtbogenofen wird stückiges Schmelzgut, in der Regel Metallschrott, gegebenenfalls zusammen mit weiteren Zuschlagstoffen durch einen zwischen dem Schmelzgut und mindestens einer Elektrode gezündeten Lichtbogen aufgeschmolzen.

Dabei hat sich gezeigt, dass vor allem Lichtbogenöfen, die praktisch ausschließlich mit Schrott beschickt werden, unerwünschte Netzrückwirkungen erzeugen. Zu diesem Zweck werden deshalb in Stahlwerken Kompensationsanlagen, sogenannte SVC-Systeme oder statische Blindleitungskompensatoren, installiert, um Netzrückwirkungen wie Oberwellen oder den sogenannten Flicker zu reduzieren und international vorgeschriebene Grenzwerte einzuhalten. Solche SVC-Systeme reagieren jedoch nur im Nachgang auf eine bereits erzeugte Netzstörung, d.h. auf die im Lichtbogenofen beim Schrotteinschmelzen erzeugten Oberwellen oder Flicker, und können, insbesondere dann, wenn die Lichtbogenöfen an schwachen Versorgungsnetzen betrieben werden, ein Einhalten der vorgeschriebenen Grenzwerte nicht sicherstellen.

Zum Vermeiden hoher Flickerwerte ist es im Stand der Technik bekannt, den Schrott in einer Mischung zuzuführen die einen niedrigen sogenannten Kst-Wert aufweist. Dieser Kst-Wert beschreibt gemäß der IEC-Norm 61000-3-7 die Art, Schwere und Dichte des Schrotts und liegt in der Regel zwischen 48 und 85 liegen. Außerdem werden im Ofenkreis sogenannte Zusatzreaktanzen eingebracht, beispielsweise eine Ofentrafovordrossel, und es erfolgt eine regelungstechnische Parametrisierung zur Lichtbogenstabilisierung. Auch neuere SVC-Systeme auf IGBT-Technik werden eingesetzt, wenn eine hohe Verbesserung der Flickerwerte notwendig ist. Durch derartige SVC-Systeme wird das erzeugte Frequenzspektrum der Störung in einen höheren Frequenzbereich transformiert, so dass diese nicht mehr in den Messbereich der Flickernetzstörung gemäß internationalen Normen fällt. Diese Maßnahmen sind jedoch entweder mit hohen Investitionskosten oder aber mit Einbußen bei der Produktion verbunden. Darüber hinaus hat nicht nur die Zusammensetzung des Schrotts und dessen Qualität einen Einfluss auf Netzrückwirkungen. Vielmehr hat auch die Fahrweise während des Schrotteinschmelzens einen derartigen Einfluss. So können beispielsweise Schrottbewegungen und Schrotteinstürze Netzrückwirkungen erzeugen. Das Erkennen von Schrottbewegungen und Schrotteinstürzen ist jedoch weitgehend dem Bedienpersonal vorbehalten, so dass eine Regelung der Elektroden auf diese Ereignisse nur nachträglich, d.h. nach erfolgter Schrottbewegung und bereits eingetretener Netzrückwirkung reagieren kann.

Der Erfindung liegt deshalb die Aufgabe zu Grunde, ein Verfahren zum Betreiben eines Lichtbogenofens anzugeben, mit dem es möglich ist, die Schrottart und Schrottdichte, Schrottbewegungen und Schrotteinstürze automatisch zu erkennen, um das Auftreten von Flicker, die auf die Schrottdichte und Schrottbewegung zurückzuführen sind, vorhersagen und automatisch beim Steuern der Prozessgrößen des Lichtbogenofens berücksichtigen zu können. Außerdem liegt der Erfindung die Aufgabe zu Grunde, eine Schmelzanlage mit einem nach diesem Verfahren betriebenen Lichtbogenofen anzugeben.

Hinsichtlich des Verfahrens wird die genannte Aufgabe gemäß der Erfindung gelöst mit einem Verfahren mit den Merkmalen des Patentanspruches 1. Gemäß diesen Merkmalen wird bei einem mit einer Wechselspannung betriebenen Lichtbogenofen ein an einer Wand des Lichtbogenofens auftretendes Körperschallsignal S erfasst, aus dem ein die Flickereigenschaften des Lichtbogenofens charakterisierender Parameter K berechnet wird, und es wird anhand dieses berechneten Parameters K zumindest eine Prozessgröße des Lichtbogenofens gesteuert.

Der Erfindung liegt dabei die Erfahrung zugrunde, dass große Flickerwerte beziehungsweise hohe Kst-Werte entweder durch eine starke Bewegung des schmelzenden Schrotts oder durch die Anwesenheit von grobstückigem Schwerschrott unter dem Lichtbogen erzeugt werden. Im ersten Fall rutscht neuer, kalter Schrott unter die Elektroden und der Lichtbogen muss je nach Bedingungen heftig und schnell nachjustiert werden. Dadurch ändern sich der Strom und die Brennbedingung abrupt. Im zweiten Fall brennt der Lichtbogen instabil und mit flukturierendem Fußpunkt.

Zwar ist es grundsätzlich aus der WO 2009/095292 A1 und der WO 2009/095396 A1 bekannt, dass aus Körperschallmessungen an der Wand des Lichtbogenofens unter Einbeziehung der Strom- und Spannungsverläufe Signale extrahiert werden können, die eine Schrottbewegung beziehungsweise Schrottverlagerung und eine Masseveränderung an der Wand des Lichtbogenofens charakterisieren. Die Erfindung beruht jedoch auf der Überlegung, dass es möglich ist, durch eine spezialisierte Auswertung des oder der an der Wand des Lichtbogenofens auftretenden Körperschallsignale S einen Parameter K zu berechnen, der geeignet ist, vorausschauend die Flickereigenschaften des Lichtbogenofens zu detektieren. Dabei wird vorzugsweise als Parameter K eine mit einem Kst-Wert vergleichbare Maßzahl berechnet.

Insbesondere wird das Körperschallsignal S einer Fouriertransformation unterzogen, und es werden Amplituden der Fouriertransformierten F des Körperschallsignales S bei einer Vielzahl von Frequenzen f ermittelt, aus denen dann der Parameter K berechnet wird. Diese Vorgehensweise berücksichtigt die Beobachtung, dass bei Schrottverlagerung oder insbesondere Schrotteinstürzen sowohl sehr niederfrequente als auch hochfrequente Schwingungen auftreten, die unabhängig von den durch den Wechselspannungsbetrieb induzierten Schwingungen des Lichtbogens sind, die ein ganzzahliges Vielfaches einer Grundfrequenz $f_0$ betragen, die bei einer Betriebsfrequenz von 50Hz 100Hz beträgt. Darüber hinaus zeigt die Erfahrung, dass die Stabilität des Lichtbogens auch durch den Gehalt an Schwerschrott beeinflusst wird, so dass ein instabiles Brennen des Lichtbogens bei ruhendem Schrott einen Rückschluss auf den Schwerschrottgehalt erlaubt, der wiederum Ursache für unerwünschten Flicker ist. Dementsprechend werden in einer bevorzugten Ausgestaltung des Verfahrens aus den Amplituden der Fouriertransformierten F bei unterhalb der Grundfrequenz $f_0$ liegenden Frequenzen f ein Maß B für eine niederfrequente Schrottbewegung, aus den Amplituden der Fouriertransformierten F bei oberhalb der Grundfrequenz $f_0$ liegenden und die harmonischen Frequenzen nicht umfassenden Frequenzen f ein Maß E für eine hochfrequente Erschütterung und aus den Amplituden der Fouriertransformierten F bei harmonischen und zwischen den harmonischen Frequenzen liegenden Frequenzen f ein den Schwerschrottgehalt charakterisierendes Maß SSG ermittelt, aus denen der Parameter K berechnet wird.

In einer besonders bevorzugten Ausgestaltung des Verfahrens wird der Parameter K mit Hilfe folgender Beziehungen ermittelt:

$$SV = B * E \qquad\qquad (1)$$

mit

$$B = \sum_{n=n0}^{n1} F^{-\alpha}(f_n) \qquad\qquad (2)$$

und
$1 \leq \alpha \leq 10$
wobei $f_{n1} < f_0$ und $f_{n+1} - f_n = \varDelta f \ll f_0$
und mit

$$E = \sum_{n=n2}^{n3} F^{\beta}(f_n) \qquad\qquad (3)$$

wobei $f_n \neq m*f_0$ und $f_{n2} > f_0$, $2 \leq \beta \leq 10$ und m eine natürliche Zahl ist,
und

$$SSG = \left(\sum_{k=2}^{k_{max}} F(kf_0)\right) * \left(\sum_{n} F(f_n)\right) \Big/ F^2(f_0) \qquad (4)$$

mit $f_n \neq m*f_0$ und $f_n > f_0$, wobei k und m natürliche Zahlen sind und $f_n$ die in Gleichung (3) verwendeten Frequenzen sind und für $k_{max} \leq 10$ gilt,
und der Parameter K mit der Gleichung

$$K = a * SV + b * SSG \qquad\qquad (5)$$

berechnet wird, wobei a und b experimentell ermittelte Gewichtsfaktoren sind.
Hinsichtlich der Schmelzanlage wird die Aufgabe gemäß der Erfindung gelöst mit einer Schmelzanlage mit den Merkmalen des Patentanspruches 6.
Zur weiteren Erläuterung der Erfindung wird auf das in den Figuren wiedergegebene Ausführungsbeispiel verwiesen. Es zeigen:

Fig. 1 eine Schmelzanlage gemäß der Erfindung in einer schematischen Prinzipdarstellung,
Fig. 2 ein Diagramm, in dem das gemessene Körperschallsignal gegen die Zeit aufgetragen ist,
Fig. 3 ein Diagramm, in dem die Amplitude der Fouriertransformierten des Körperschallsignals gegen die Frequenz aufgetragen ist.

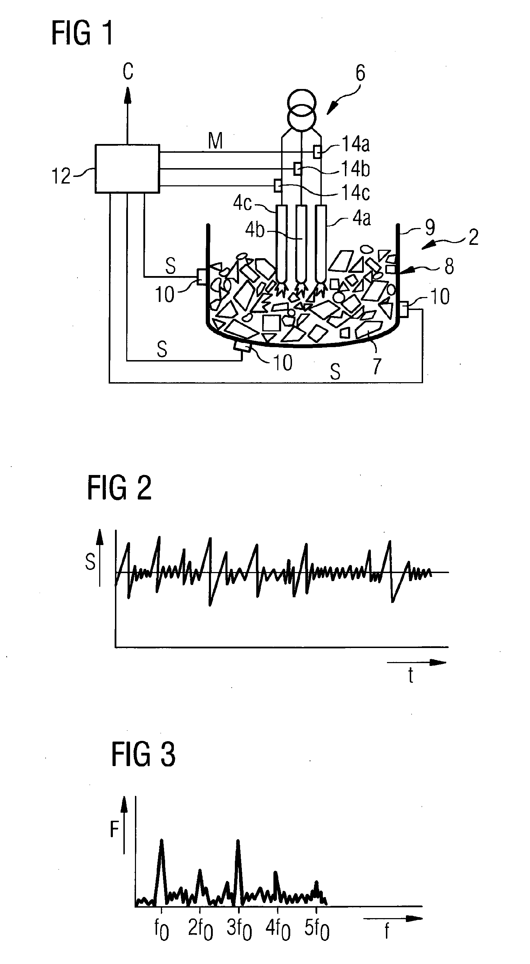

Gemäß Fig. 1 umfasst eine Schmelzanlage gemäß der Erfindung einen Lichtbogenofen 2 mit beispielsweise drei Elektroden 4a-c, die elektrisch an den Ofentransformator einer Stromversorgungseinrichtung 6 angeschlossen sind. Die Elektroden 4a-c tauchen in ein den aufzuschmelzenden Schrott 7 aufnehmendes Ofengefäß 8 ein, an dessen Wand 9 eine Mehrzahl von Körperschallaufnehmern 10 angeordnet sind. Die von den Körperschallaufnehmern 10 erfassten Körperschallsignale S werden zur weiteren Verarbeitung an eine Steuer- und Auswerteeinrichtung 12 übermittelt.

Zusätzlich zu den Körperschallsignalen S werden mit Hilfe von Messwertaufnehmern 14a-c der in den Elektroden 4 fließende Strom und/oder die an ihnen anliegende Spannung gemessen und die entsprechenden Messsignale M an die Steuer- und Auswerteeinrichtung 12 übermittelt. In dieser Steuer- und Auswerteeinrichtung werden Steuersignale C generiert, mit denen zumindest eine Prozessgröße des Lichtbogenofens 2 gesteuert oder geregelt wird.

Im Diagramm der Fig. 2 ist beispielhaft ein mit einem Körperschallaufnehmer 10 gemessenes Körperschallsignal S gegen die Zeit t aufgetragen, wobei grundsätzlich auch die von mehreren Körperschallaufnehmern 10 erzeugten Körperschallsignale S zu einem Summensignal zusammengefasst sein können. Von diesem Körperschallsignal S wird nun mittels Fouriertransformation (FFT) das Frequenzspektrum ermittelt, das im Fig. 3 wiedergegeben ist, in dem die Amplitude der Fouriertransformierten F gegen die Frequenz f aufgetragen ist. In dieser Fig. 3 ist zu erkennen, dass der Betrag (Amplitude) der Fouriertransformierten F für Frequenzen $f_0$, $2f_0$, $3f_0$, $4f_0$ und $5f_0$ signifikante Maxima aufweist, deren Höhe mit zunehmender Frequenz f abnimmt. Diese Maxima liegen bei harmonischen Frequenzen $mf_0$ zu einer Grundfrequenz $f_0$, d.h. entsprechen ganzzahligen Vielfachen dieser Grundfrequenz $f_0$, die das Doppelte der Frequenz der Spannung (Betriebsfrequenz) beträgt, mit der die Elektroden betrieben werden. Bei einer Betriebsfrequenz von 50Hz liegen diese harmonischen Frequenzen $f_0$ bei 100, 200, 300, 400 bzw. 500Hz.

Aus der Fouriertransformierten F kann nun ein Maß für die Schrottverlagerung SV aus dem aus einem Maß B für eine niederfrequente Schrottbewegung und einem Maß E für eine hochfrequente Erschütterung gebildeten Produkt

$$SV = B * E \qquad\qquad (1)$$

mit folgenden Beziehungen berechnet werden:
mit

$$B = \sum_{n=n0}^{n1} F^{-\alpha}(f_n) \qquad\qquad (2)$$

wobei $f_{n1} < f_0$ und $f_{n+1} - f_n = \Delta f \ll f_0$

Ein geeigneter Wert für $f_{n0}$ ist beispielsweise 1Hz. Als Obergrenze $f_{n1}$ ist ein Wert geeignet, der deutlich unterhalb der Grundfrequenz $f_0$, vorzugsweise unterhalb der Betriebsfrequenz $f_0/2$ liegt und im Beispiel 30 Hz beträgt, wobei die mit $-\alpha$ potenzierten Amplituden der Fouriertransformierten F bei Frequenzen $f_n$ addiert werden, die sich jeweils um $\Delta f = 1Hz$ entsprechend einer bei einer schnellen Fouriertransformation typischerweise erzielbaren Frequenzauflösung unterscheiden. Für den Parameter $\alpha$ gilt: $1 \leq \alpha \leq 10$, wobei sich $\alpha = 1$ als geeignet herausgestellt hat.

$$E = \sum_{n=n2}^{n3} F^{\beta}(f_n) \qquad\qquad (3)$$

wobei $f_n \neq m * f_0$ und $f_{n2} > f_0$ mit $2 \leq \beta \leq 10$ und m eine natürliche Zahl ist.

Zum Berechnen des Maßes E für die Erschütterung werden die mit $\beta$ potenzierten Amplituden der Fouriertransformierten F bei Zwischenfrequenzen $f_n \neq m*f_0$ addiert, die hinreichend beabstandet von den harmonischen Frequenzen sind, so dass diese keinen Beitrag zu den verwendeten Amplituden leisten.

Da der Lichtbogen unter kaltem Schwerschrott instabil und mit flukturierendem Fußpunkt brennt, weist das erzeugte Körperschallspektrum, d. h. die Fouriertransformierte F sowohl stark erhöhte Amplituden bei den höheren

harmonischen Frequenzen $mf_0$ als auch eine große Anzahl von Maxima bei zwischen den harmonischen Frequenzen $mf_0$ liegenden Zwischenfrequenzen auf. Ein Maß SSG für den Schwerschrottgehalt kann daher vorteilhaft durch folgende Beziehung ermittelt werden.

$$SSG = \left( \sum_{k=2}^{k_{max}} F(kf_0) \right) * \left( \sum_{i} F(f_i) \right) \Big/ F^2(f_0) \qquad (4)$$

mit $f_n \neq m*f_0$ und $f_n > f_0$, wobei k und m natürliche Zahlen und $f_n$ die in Gleichung (3) verwendeten Frequenzen sind und für $k_{max} \leq 10$ gilt.

Aus dem Maß SV für die Schrottverlagerung und dem Maß SSG für den Schwerschrottgehalt kann nun mit Hilfe von Gewichten a und b ein Parameter K mit der Beziehung

$$K = a * SV + b * SSG \qquad (5)$$

bestimmt werden, wobei die Gewichte a, b experimentell aus der Korrelation des auf diese Weise berechneten Wertes und dem tatsächlich gemessenen Flicker bestimmt und derart angepasst werden, dass der auf diese Weise berechnete dynamische Parameter K mit einem Kst-Wert vergleichbar ist. Auf diese Weise kann somit während des Einschmelzvorgangs ein mit dem Kst-Wert korrelierter Parameter K berechnet werden, der die aktuelle Schrottbewegung und den aktuellen Schrottstatus beschreibt. Dieser berechnete Parameter K entspricht nicht genau dem Kst-Wert gemäß Definition der vorstehend genannten IEC-Norm, gibt aber den Verlauf und die Tendenz richtig wieder und kann daher optimal zur Flickervorhersage und zur Einstellung der Regelung zur Flickervermeidung verwendet werden.

Unter Einbeziehung weiterer Daten, insbesondere der Strom- und Spannungsverläufe, der Wandtemperaturen und/oder der eingebrachten spezifischen Energie kann nun ein übergeordnetes, komplettes Regelungssystem zur Prozessausführung erstellt werden, mit dem zustandsorientiert und schnell auf die im Lichtbogenofen stattfindenden dynamischen Veränderungen reagiert werden kann. Ein derartiges Steuer- bzw. Regelungssystem wirkt vorzugsweise auf die Spannungsstufe des Ofentransformators, die Impedanz- beziehungsweise Stromsollwerte für die Elektrodenregelung, die Zusatzreaktanzen und die Sollwertvorgaben für Brenner und Lanzen ein. Als Grundlage können dabei die Werte eines fest hinterlegten Fahrdiagramms verwendet werden, die durch das Regelungssystem dynamisch in vorgegebenen Grenzen verändert werden. Die Messung der dynamischen Veränderung des Schrotts während des Einschmelzprozesses im Lichtbogenofen wird kombiniert mit einem übergeordneten, modularen, beispielsweise Fuzzybasierten Regelungssystem zur energetischen Prozessführung des Lichtbogenofens, welches den elektrischen Arbeitspunkt und die Sollwerte der Brenner- und Lanzensysteme vorgibt. Dies erlaubt ein dynamisches zustandsorientiertes Eingreifen in den Schmelzprozess. Unter Verwendung eines kompletten Regelungskonzeptes basierend auf linguistischen fuzzifizierten Regeln und weiteren analytischen Verrechnungen, unter anderem mit Hilfe eines analytischen Modells der Lastverteilung kann dann der Schmelzprozess so angepasst werden, dass der Flicker vorgeschriebene Grenzwerte nicht überschreitet.

**Patentansprüche**

1. Verfahren zum Betreiben eines mit einer Wechselspannung betriebenen Lichtbogenofens (2), bei dem ein an einer Wand des Lichtbogenofens (2) auftretendes Körperschallsignal (S) erfasst wird, aus dem ein die Flickereigenschaften des Lichtbogenofens (2) charakterisierender Parameter K berechnet wird und anhand des berechneten Parameters K zumindest eine Prozessgröße des Lichtbogenofens (2) gesteuert wird.

2. Verfahren nach Anspruch 1,
bei dem der Parameter K eine mit einem Kst-Wert vergleichbare Maßzahl ist.

3. Verfahren nach Anspruch 1 oder 2,
bei dem das Körperschallsignal (S) einer Fouriertransformation unterzogen wird, und bei dem die Amplituden der Fouriertransformierten F bei einer Vielzahl von Frequenzen f ermittelt werden, aus denen der Parameter K berechnet wird.

**4.** Verfahren nach Anspruch 3,
bei dem aus den Amplituden der Fouriertransformierten F bei unterhalb einer Grundfrequenz $f_0$ liegenden Frequenzen ein Maß B für eine niederfrequente Schrottbewegung, aus den Amplituden der Fouriertransformierten F bei oberhalb der Grundfrequenz $f_0$ liegenden und die harmonischen Frequenzen nicht umfassenden Frequenzen f ein Maß E für eine hochfrequente Erschütterung, und aus den Amplituden der Fouriertransformierten F bei harmonischen und zwischen den harmonischen Frequenzen $mf_0$ liegenden Frequenzen f ein die Stabilität des Lichtbogens charakterisierendes Maß SSG ermittelt wird, aus denen der Parameter K berechnet wird.

**5.** Verfahren nach Anspruch 4,
bei dem der Parameter K mit Hilfe folgender Beziehungen ermittelt wird:

$$SV = B * E \qquad\qquad (1)$$

mit

$$B = \sum_{n=n0}^{n1} F^{-\alpha}(f_n) \qquad\qquad (2)$$

wobei $f_{n1} < f_0$ und $f_{n+1} - f_n - \mathit{\Delta f} \ll f_0$
und mit

$$E = \sum_{n=n2}^{n3} F^{\beta}(f_n) \qquad\qquad (3)$$

wobei $f_n \neq m^*f_0$ und $f_{n2} > f_0$, $2 \leq \beta \leq 10$ und m eine natürliche Zahl ist,
und

$$SSG = \left(\sum_{k=2}^{k_{max}} F(kf_0)\right) * \left(\sum_{n} F(f_n)\right) \Big/ F^2(f_0) \qquad\qquad (4)$$

mit $f_n \neq m^*f_0$ und $f_n > f_0$, wobei k und m natürliche Zahlen sind und $f_n$ die in Gleichung (3) verwendeten Frequenzen sind und für $k_{max} \leq 10$ gilt,
und der Parameter K mit der Gleichung

$$K = a * SV + b * SSG \qquad\qquad (5)$$

berechnet wird, wobei a und b experimentell ermittelte Gewichtsfaktoren sind.

**6.** Schmelzanlage mit einem Lichtbogenofen (2) mit wenigstens einer Elektrode (4a-c) und mit zumindest einem an einer Wand (9) des Lichtbogenofens (2) angeordneten Körperschallaufnehmer (10) sowie mit einer Steuer- und Auswerteeinrichtung (12) zum Auswerten der mit dem zumindest einem Körperschallaufnehmer (10) aufgenommenen Körperschallsignale (S) und mit einer darin implementierten Software zum Durchführen eines der Verfahren nach den vorhergehenden Ansprüchen.

**Claims**

1. Method for operating an electric arc furnace (2) operated using an alternating voltage, by which a structure-borne sound signal (S) arising at a wall of the electric arc furnace (2) is detected, and from this is calculated a parameter K which characterises the flicker properties of the electric arc furnace (2), and by reference to the calculated parameter K at least one process variable for the electric arc furnace (2) is controlled.

2. Method according to claim 1,
   in which the parameter K is a numeric measure comparable with a Kst value.

3. Method according to claim 1 or 2,
   in which the structure-borne sound signal (S) is subject to a Fourier transformation, and in which the amplitudes of the Fourier transform F are determined, at a plurality of frequencies f, from which the parameter K is calculated.

4. Method according to claim 3,
   in which are determined, from the amplitudes of the Fourier transform F at frequencies which lie below a fundamental frequency $f_0$, a measure B for a low-frequency scrap movement, from the amplitudes of the Fourier transform F at frequencies f which lie above the fundamental frequency $f_0$ and do not include the harmonic frequencies a measure E for a high frequency vibration, and from the amplitudes of the Fourier transform F at frequencies f which lie at and between the harmonic frequencies $mf_0$ a measure SSG which characterises the stability of the electric arc, from which is calculated the parameter K.

5. Method according to claim 4,
   in which the parameter K is determined using the following relationships:

$$SV = B * E \qquad\qquad (1)$$

where

$$B = \sum_{n=n0}^{n1} F^{-\alpha}(f_n) \qquad\qquad (2)$$

where $f_{n1} < f_0$ and $f_{n+1} - f_n = \Delta f \ll f_0$
and where

$$E = \sum_{n=n2}^{n3} F^{\beta}(f_n) \qquad\qquad (3)$$

where $f_n \neq m * f_0$ and $f_{n2} > f_0$, $2 \leq \beta \leq 10$ and m is a natural number, and

$$SSG = \left( \sum_{k=2}^{k_{max}} F(kf_0) \right) * \left( \sum_{n} F(f_n) \right) \Big/ F^2(f_0) \qquad (4)$$

where $f_n \neq m * f_0$ and $f_n > f_0$, where k and m are natural numbers and the frequencies $f_n$ are those used in equation (3) and $k_{max} \leq 10$ applies,
and the parameter K is calculated from the equation

$$K = a * SV + b * SSG \qquad (5)$$

where a and b are experimentally determined weighting factors.

**6.** Smelting plant with an electric arc furnace (2) with at least one electrode (4a-c) and with at least one structure-borne sound sensor (10) arranged on a wall (9) of the electric arc furnace (2) together with a control and analysis facility (12) for analysing the structure-borne sound signals (S) sensed by the at least one structure-borne sound sensor (10) and with software implemented in it for carrying out a method according to the preceding claims.

**Revendications**

**1.** Procédé pour faire fonctionner un four ( 2 ) à arc électrique fonctionnant sous une tension alternative, dans lequel on détecte un signal ( S ) de bruit de corps se produisant sur une paroi du four ( 2 ) à arc électrique, on en calcule un paramètre K caractérisant les propriétés de retorchage du four ( 2 ) à arc électrique et, à l'aide du paramètre K calculé, on commande au moins une grandeur opératoire du four ( 2 ) à arc électrique.

**2.** Procédé suivant la revendication 1,
dans lequel le paramètre K est un indice comparable à une valeur Kst.

**3.** Procédé suivant la revendication 1 ou 2,
dans lequel on soumet le signal ( S ) de bruit de corps à une transformation de Fourier et dans lequel on détermine, pour une pluralité de fréquences f, les amplitudes des transformés F de Fourier, à partir desquelles on calcule le paramètre K.

**4.** Procédé suivant la revendication 3,
dans lequel on détermine, à partir des amplitudes des transformés F de Fourier, pour des fréquences se trouvant en dessous d'une fréquence $f_0$ fondamentale, une valeur B de mouvement de riblon en basse fréquence, à partir des amplitudes des transformés F de Fourier, pour des fréquences f au dessus de la fréquence $f_0$ fondamentale et ne comprenant pas les fréquences harmoniques, une valeur E pour un secouage en haute fréquence, et à partir des amplitudes des transformés F de Fourier pour des fréquences f harmoniques et se trouvant entre les fréquences $mf_0$ harmoniques, une valeur SSG caractérisant la stabilité du four à arc électrique, à partir desquelles on calcule le paramètre K.

**5.** Procédé suivant la revendication 4,
dans lequel on détermine le paramètre K à l'aide des relations suivantes :

$$SV \ = \ B \ * \ E \qquad\qquad ( \ 1 \ )$$

avec

$$B = \sum_{n=n0}^{n1} F^{-\alpha}(f_n) \qquad (2)$$

dans lesquelles $f_{n1} < f_0$ et $f_{n+1} - f_n = \Delta f << f_0$
et avec

$$E = \sum_{n=n2}^{n3} F^{\beta}(f_n) \qquad (3)$$

dans lesquelles $f_n \neq m * f_0$ et $f_{n2} > f_0$, $2 \leq \beta \leq 10$ et m est un nombre naturel,
et

$$SSG = \left( \sum_{k=2}^{k_{max}} F(kf_0) \right) * \left( \sum_{n} F(f_n) \right) \Big/ F^2(f_0) . \qquad (4)$$

avec $f_n \neq m * f_0$ et $f_n > f_0$, dans lesquelles k et m sont des nombres naturels et $f_n$ sont les fréquences utilisées dans l'équation ( 3 ) et on a kmax $\leq$ 10,
et on calcule le paramètre K par l'équation

$$K = a * SV + b * SSG \qquad ( 5 )$$

dans laquelle a et b sont des facteurs de pondération déterminés expérimentalement.

6. Installation de fusion comprenant un four ( 2 ) à arc électrique et au moins une électrode ( 4a-c ) et au moins un enregistreur ( 10 ) de bruit de corps, monté sur une paroi ( 9 ) du four ( 2 ) à arc électrique, ainsi qu'un dispositif ( 12 ) de commande et d'exploitation des signaux ( S ) de bruit de corps enregistrés par le au moins un enregistreur ( 10 ) de bruit de corps et ayant un logiciel qui y est mis en oeuvre pour effectuer un procédé suivant l'une des revendications précédentes.

## FIG 1

## FIG 2

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009095292 A1
- WO 2009095396 A1